# EUROPÄISCHE PATENTSCHRIFT

(11) **EP 4 089 855 B1**
(45) Veröffentlichungstag und Bekanntmachung des Hinweises auf die Patenterteilung: **19.03.2025**
(21) Anmeldenummer: 22172430.5
(22) Anmeldetag: 10.05.2022
(51) Int. Cl.: H01R 24/38, H01R 25/16, H01R 4/34

(54) **DOPPELSTROMSCHIENE MIT EINER KONTAKTEINRICHTUNG UND KONTAKTSYSTEM FÜR ZWEI DOPPELSTROMSCHIENEN**
DUAL BUSBAR WITH A CONTACT DEVICE AND CONTACT SYSTEM FOR TWO DUAL BUSBARS
RAIL CONDUCTEUR DOUBLE AVEC DISPOSITIF DE CONTACT ET SYSTÈME DE CONTACT POUR DEUX RAILS CONDUCTEURS DOUBLES

(30) Priorität: 11.05.2021 DE 102021112301
(43) Veröffentlichungstag der Anmeldung: 16.11.2022
(73) Patentinhaber: Lisa Dräxlmaier GmbH, 84137 Vilsbiburg (DE)
(72) Erfinder: Himmel, Jörg, 84072 Au i. d. Hallertau (DE); Neumayer, Franziska, 84144 Geisenhausen (DE); Hammerl, Reinhold, 85748 Garching (DE)

(56) Entgegenhaltungen:
- US-A1- 2011 127 061
- US-B1- 9 490 555

## Beschreibung

### Technisches Gebiet

Die vorliegende Erfindung betrifft eine Doppelstromschiene mit einer Kontakteinrichtung und ein Kontaktsystem für zwei Doppelstromschienen.

### Stand der Technik

Die vorliegende Erfindung wird im Folgenden hauptsächlich in Verbindung mit Fahrzeugbordnetzen beschrieben. Die Erfindung kann aber in jeder Anwendung genutzt werden, in welcher elektrische Lasten, insbesondere große elektrische Lasten mit erheblichen Leistungen von beispielsweise mehr als 10kW bzw. mit erheblichen Spannungen von beispielsweise mehr als 100V, übertragen werden.

In einem Niedervolt-Bordnetz eines Fahrzeugs kann elektrisch leitendes Blech einer Karosserie als Masse verwendet werden, wodurch eine Leitungslänge von Rückleitungen verkürzt werden kann. So kann näherungsweise auf die Hälfte aller Kabel im Fahrzeug verzichtet werden.

Zum Übertragen großer elektrischer Lasten kann KFZ-Hochvoltspannung mit beispielsweise mehr als 300V oder sogar mehr als 700V verwendet werden. Für die KFZ-Hochvoltspannung können Stromschienen aus massivem Metallmaterial verwendet werden. Wenn Stromschienen verwendet werden, können separate Plus- und Minus-Schienen verwendet werden um die erforderliche Sicherheit (Berührschutz, Schutz gegen Lichtbogen beziehungsweise Spannungsdurchschlag etc.) zu gewährleisten. Die Plus- und Minus-Schienen können als Doppelschiene, d.h. flächig mit geringem Abstand (<5mm) aufeinanderliegend ausgebildet sein.

Die Druckschrift US 9 490 555 B1 beschreibt eine erste Busstruktur, die eine erste äußere leitende Schicht und eine erste innere leitende Schicht umfasst, die durch eine erste dielektrische Schicht getrennt sind. Eine zweite Busstruktur umfasst eine zweite äußere leitende Schicht und eine zweite innere leitende Schicht, die durch eine zweite dielektrische Schicht getrennt sind. Eine äußere Hülse verbindet die erste innere leitende Schicht elektrisch mit der zweiten inneren leitenden Schicht. Eine innere Hülse verbindet die erste äußere leitende Schicht elektrisch mit der zweiten äußeren leitenden Schicht. Ein Befestigungselement erstreckt sich durch die innere Hülse, um die erste äußere leitende Schicht und die zweite äußere leitende Schicht gegeneinander zu klemmen oder zu komprimieren.

### Beschreibung der Erfindung

Eine Aufgabe der Erfindung ist es daher, unter Einsatz konstruktiv möglichst einfacher Mittel eine verbesserte Kontakteinrichtung für eine Doppelstromschiene und ein verbessertes Kontaktsystem für zwei Doppelstromschienen bereitzustellen. Eine Verbesserung kann hierbei beispielsweise eine verbesserte Abstrahlcharakteristik, insbesondere eine reduzierte Abstrahlung elektromagnetischer Felder betreffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

In einem elektrisch angetriebenen Fahrzeug sind auch bei KFZ-Hochvoltspannung große elektrische Stromflüsse erforderlich, um eine Antriebsleistung beziehungsweise Brems- oder Rekuperationsleistung zu übertragen. Rund um stromdurchflossene Leiter des Fahrzeugs werden durch die Stromflüsse elektromagnetische Felder erzeugt. Um eine Abstrahlung der Felder zu verringern oder auch zu verhindern, können die Leiter geschirmt werden. Alternativ oder ergänzend können die Leiter für die Hinleitung und die Rückleitung möglichst parallel und nah zusammen angeordnet werden, da sich die durch die entgegengesetzten Stromflüsse verursachten elektromagnetischen Felder gegenseitig auslöschen.

Auch bei Stromschienen können die Stromschiene für die Hinleitung und die Stromschiene für die Rückleitung sehr nahe zusammen angeordnet werden, indem die beiden Stromschienen deckungsgleich aufeinandergestapelt werden. Die gestapelten Stromschienen sind dabei einzeln elektrisch isoliert. Diese Anordnung kann als Doppelstromschiene bezeichnet werden.

Um den Effekt der Auslöschung auch an Kontaktstellen aufrecht zu erhalten, wird bei dem hier vorgestellten Ansatz eine zentralverschraubte Doppelbuchse vorgeschlagen, der eine koaxiale Führung der Stromflüsse auch an der Kontaktstelle ermöglicht.

Es wird eine Doppelstromschiene mit einer Kontakteinrichtung vorgeschlagen, wobei die Doppelstromschiene eine erste Stromschiene und eine zweite Stromschiene aufweist, die durch eine Isolierung voneinander separiert sind und zu einem Stapel übereinandergestapelt sind, wobei die Kontakteinrichtung eine äußere Kontaktbuchse zum Kontaktieren einer äußeren Gegenbuchse eines Gegenstücks zu der Kontakteinrichtung und eine koaxial in der äußeren Kontaktbuchse angeordnete innere Kontaktbuchse zum Kontaktieren einer inneren Gegenbuchse des Gegenstücks aufweist, wobei die innere Kontaktbuchse eine axiale Aufnahme für einen Zuganker zum Ausüben einer axialen Zugkraft zwischen der Kontakteinrichtung und dem Gegenstück umschließt, wobei die äußere Kontaktbuchse auf einer Flachseite der ersten Stromschiene angeordnet ist und mit der ersten Stromschiene elektrisch leitend verbunden ist, wobei die innere Kontaktbuchse mit der zweiten Stromschiene elektrisch leitend verbunden ist und die erste Stromschiene durchdringt, wobei die Aufnahme die erste Stromschiene und die zweite Stromschiene durchdringt, wobei eine stirnseitige Kontaktfläche der äußeren Kontaktbuchse über eine stirnseitige Kontaktfläche der inneren Kontaktbuchse übersteht.

Weiterhin wird ein Kontaktsystem für zwei Doppelstromschienen vorgeschlagen, wobei die Doppelstromschienen je eine erste Stromschiene und eine zweite Stromschiene aufweisen, die durch eine Isolierung voneinander separiert sind und zu einem Stapel übereinandergestapelt sind, wobei die eine Doppelstromschiene eine Kontakteinrichtung aufweist, wobei die Kontakteinrichtung eine äußere Kontaktbuchse zum Kontaktieren einer äußeren Gegenbuchse eines Gegenstücks zu der Kontakteinrichtung und eine koaxial in der äußeren Kontaktbuchse angeordnete innere Kontaktbuchse zum Kontaktieren einer inneren Gegenbuchse des Gegenstücks aufweist, wobei die innere Kontaktbuchse eine axiale Aufnahme für einen Zuganker zum Ausüben einer axialen Zugkraft zwischen der Kontakteinrichtung und dem Gegenstück umschließt, wobei die äußere Kontaktbuchse auf einer Flachseite der ersten Stromschiene angeordnet ist und mit der ersten Stromschiene elektrisch leitend verbunden ist, wobei die innere Kontaktbuchse mit der zweiten Stromschiene elektrisch leitend verbunden ist und die erste Stromschiene durchdringt, wobei die Aufnahme die erste Stromschiene und die zweite Stromschiene durchdringt und wobei die andere Doppelstromschiene ein Gegenstück zu der Kontakteinrichtung aufweist, wobei die äußere Kontaktbuchse elektrisch leitend mit einer äußeren Gegenbuchse des Gegenstücks verbunden ist und ein äußeres Kontaktbuchsenpaar des Kontaktsystems ausbildet, wobei die innere Kontaktbuchse an einer stirnseitigen Kontaktfläche elektrisch leitend mit einer inneren Gegenbuchse des Gegenstücks verbunden ist und ein inneres Kontaktbuchsenpaar des Kontaktsystems ausbildet, wobei ein Zuganker zum Ausüben einer axialen Zugkraft in der Aufnahme angeordnet ist und die Kontakteinrichtung und das Gegenstück mit der Zugkraft zusammenzieht.

Unter einer Stromschiene kann ein massiver Streifen Metallblech verstanden werden. Die Stromschiene kann beispielsweise aus einem Aluminiummaterial oder einem Kupfermaterial sein. Aluminium beziehungsweise Aluminiumlegierungen weisen eine gute elektrische Leitfähigkeit bei geringem Gewicht und geringen Materialkosten auf. Kupfer beziehungsweise Kupferlegierungen können eine höhere elektrische Leitfähigkeit als Aluminium beziehungsweise Aluminiumlegierungen aufweisen. Zusätzlich kann Kupfer beziehungsweise eine Kupferlegierung oxidationsbeständig sein und einen geringen Übergangswiderstand aufweisen. Die Stromschiene kann einen rechteckigen Leitungsquerschnitt aufweisen. Dabei kann die Stromschiene länglich sein und eine Länge von beispielsweise mehr als 0,5 m, vorzugsweise mehr als 1 m, und eine Breite von beispielsweise zwischen 0,5 cm und 10 cm, vorzugsweise zwischen 1 cm und 5 cm, aufweisen. Die Stromschiene kann ferner eine Dicke von beispielsweise zwischen 1 mm und 10 mm aufweisen. Die Stromschiene kann auf allen Seiten eine Isolierung aufweisen, d.h. von einer Isolierung umhüllt sein. Die Isolierung kann beispielsweise aus einem Kunststoffmaterial sein. Das Kunststoffmaterial kann ein Thermoplast sein. Die Stromschiene kann mit dem Thermoplast umspritzt sein. Die Isolierung kann Eigenschaften aufweisen, die für KFZ-Hochvoltspannung von bis zu 1000 Volt Gleichstrom ausgelegt sind. Insbesondere kann eine Materialstärke der Isolierung eine Durchschlagfestigkeit gegen die KFZ-Hochvoltspannung sicherstellen.

Eine Doppelstromschiene kann aus zwei Stromschienen mit gleichen Abmessungen bestehen. Die beiden Stromschienen können an Flachseiten aufeinandergestapelt sein. Die Stromschienen können auch einen geringen Abstand zueinander aufweisen. Die Stromschienen können deckungsgleich angeordnet sein. Die Doppelstromschiene kann mit einem Kunststoffmaterial ummantelt sein. Alternativ oder ergänzend kann die Doppelstromschiene mit einem Gewebematerial ummantelt sein. Das Gewebematerial kann beispielsweise als Gewebeband um die Doppelstromschiene gewickelt sein. Die Doppelstromschiene kann auch zusätzlich durch einen elektrisch leitenden Mantel gegen die Abstrahlung von elektromagnetischen Feldern geschirmt sein.

Die eine Stromschiene der Doppelstromschiene kann in verbautem Zustand mit einem Pluspotenzial der KFZ-Hochvoltspannung verbunden sein. Die andere Stromschiene der Doppelstromschiene kann mit einem Minuspotenzial der KFZ-Hochvoltspannung verbunden sein. Stromflüsse durch die beiden Stromschienen fließen so in entgegengesetzte Richtungen und sind gleich groß. Durch die räumliche Nähe der Stromschienen in der Doppelstromschiene kompensieren sich die resultierenden elektromagnetischen Felder im Wesentlichen vollständig.

Eine Kontaktbuchse kann aus einem Kupfermaterial bestehen. Die Kontaktbuchse kann rotationssymmetrisch sein. Die Kontaktbuchse kann im Wesentlichen hohlzylindrisch sein. Die Kontaktbuchse kann eine Verbindungsgeometrie zum elektrisch leitenden Verbinden mit der jeweiligen Stromschiene aufweisen.

Die Kontaktbuchsen sind elektrisch voneinander isoliert. Zwischen der inneren Kontaktbuchse und der äußeren Kontaktbuchse kann eine Isolierbuchse angeordnet sein. Die Isolierbuchse kann rotationssymmetrisch sein. Die Isolierbuchse kann im Wesentlichen hohlzylindrisch sein.

Eine Gegenbuchse kann aus einem Kupfermaterial bestehen. Die Gegenbuchse kann rotationssymmetrisch sein. Die Gegenbuchse kann im Wesentlichen hohlzylindrisch sein. Die Gegenbuchse kann eine Verbindungsgeometrie zum elektrisch leitenden Verbinden mit der jeweiligen Stromschiene aufweisen.

Die Gegenbuchsen sind elektrisch voneinander isoliert. Zwischen der inneren Gegenbuchse und der äußeren Gegenbuchse kann eine Isolierbuchse angeordnet sein. Die Isolierbuchse kann rotationssymmetrisch sein. Die Isolierbuchse kann im Wesentlichen hohlzylindrisch sein.

Eine Aufnahme kann eine durchgehende Aussparung in der inneren Kontaktbuchse und der inneren Gegenbuchse sein. Ein Zuganker kann aus einer Schraube und einer Mutter bestehen. Zwischen den Rückseiten der Kontakteinrichtung beziehungsweise des Gegenstücks und Widerlagern des Zugankers können Unterlegscheiben angeordnet sein.

Die Kontakteinrichtung und das Gegenstück können gegengleich beziehungsweise komplementär zueinander ausgeführt sein. Die stirnseitige Kontaktfläche der inneren Kontaktbuchse kann eben sein.

Die stirnseitige Kontaktfläche der äußeren Kontaktbuchse steht über die stirnseitige Kontaktfläche der inneren Kontaktbuchse über. Die Kontakteinrichtung mit der überstehenden äußeren Kontaktbuchse kann als Stecker des Kontaktsystems bezeichnet werden.

Alternativ kann die stirnseitige Kontaktfläche der inneren Kontaktbuchse über die stirnseitige Kontaktfläche der äußeren Kontaktbuchse überstehen. Die Kontakteinrichtung mit der überstehenden inneren Kontaktbuchse kann als Header des Kontaktsystems bezeichnet werden.

Die stirnseitige Kontaktfläche der äußeren Kontaktbuchse kann konisch geformt sein. Alternativ oder ergänzend kann die stirnseitige Kontaktfläche der inneren Kontaktbuchse konisch geformt sein. Durch eine konische Form können sich die Kontakteinrichtungen beim Kontaktieren gegenseitig zentrieren.

Die stirnseitige Kontaktfläche der äußeren Kontaktbuchse kann sphärisch geformt sein. Alternativ oder ergänzend kann die stirnseitige Kontaktfläche der inneren Kontaktbuchse sphärisch geformt sein. Durch eine sphärische Form kann das Kontaktsystem eine Winkeltoleranz aufweisen. Dadurch ist eine exakt parallele Ausrichtung der Doppelstromscheinen zueinander nicht erforderlich.

Auf einer Innenseite der äußeren Kontaktbuchse kann ein Lamellenband zum Kontaktieren der äußeren Gegenbuchse angeordnet sein. Ein Lamellenband kann ringförmig entlang eines Innendurchmessers der äußeren Kontaktbuchse umlaufen. Das Lamellenband kann elektrisch leitend sein und elektrisch leitend mit der Innenseite der äußeren Kontaktbuchse verbunden sein. Das Lamellenband kann federnde Lamellen aufweisen. Das Lamellenband kann einen kleineren Innendurchmesser als die äußere Kontaktbuchse aufweisen. Die Lamellen können im Wesentlichen axial zu der äußeren Kontaktbuchse ausgerichtet sein. Die Lamellen können beim Kontaktieren durch die äußere Gegenbuchse elastisch verformt werden und mit einer resultierenden Rückstellkraft gegen die äußere Gegenbuchse drücken. Durch die Elastizität der Lamellen kann ein axialer Versatz und/oder ein Winkelversatz zwischen der Kontakteinrichtung und dem Gegenstück ausgeglichen werden.

Die äußere Gegenbuchse kann im Wesentlichen der äußeren Kontaktbuchse entsprechen. Ein Außendurchmesser der äußeren Gegenbuchse kann kleiner als der Innendurchmesser der äußeren Kontaktbuchse im Bereich des Lamellenbands sein. Der Außendurchmesser der äußeren Gegenbuchse kann größer als der Innendurchmesser des Lamellenbands sein. Die Gegenbuchsen können ohne Lamellenband ausgeführt sein.

Die äußere Kontaktbuchse kann auf der Innenseite eine umlaufende Nut, d.h. eine Ringnut, für das Lamellenband aufweisen. In einer solchen Nut können zumindest Teilbereiche oder eine Gesamtheit des der äußeren Kontaktbuchse zugeordneten Lamellenbandes aufgenommen sein. Durch eine Nut kann das Lamellenband axial in der äußeren Kontaktbuchse fixiert sein. Die Lamellen des Lammellenbands können aus der Nut in einen Innenraum der äußeren Kontaktbuchse ragen. Das Lamellenband kann als rund gebogener Streifen mit einer einem Umfang der Nut entsprechenden Länge in die Nut eingelegt werden. Das Lamellenband kann durch eine Rückstellkraft gegen einen Grund der Nut gedrückt werden.

Im Bereich des äußeren Lamellenbands kann ein ringförmiger Spalt für die äußere Gegenbuchse zwischen der äußeren Kontaktbuchse und der inneren Kontaktbuchse angeordnet sein. Der Spalt kann breiter als die äußere Gegenbuchse sein. Auf seiner Innenseite kann der Spalt durch die Isolierung begrenzt sein. Der Spalt kann durch einen vergrößerten Innendurchmesser der äußeren Kontaktbuchse ausgebildet sein. Durch den Spalt kann die äußere Gegenbuchse zwischen die äußere Kontaktbuchse und die Innere Kontaktbuchse eingeführt werden. So kann das Kontaktsystem eine geringe Bauhöhe aufweisen.

Lamellen des Lamellenbandes können länglich ausgebildet sein, sich im Wesentlichen parallel zu einer Axialrichtung der äußeren Kontaktbuchse erstrecken und zumindest bereichsweise über eine Innenoberfläche der äußeren Kontaktbuchse nach radial innen überstehen. Die Lamellen des Lamellenbandes können elastisch federnd über die Innenoberfläche der äußeren Kontaktbuchse nach radial innen überstehen.

Das Lamellenband kann einen oberen Gürtel, einen unteren Gürtel und eine Vielzahl von quer zwischen dem oberen Gürtel und dem unteren Gürtel angeordneten Lamellen aufweisen. Das Lamellenband kann ein Stanzbiegeteil sein. Zwischen den Lamellen kann das Lamellenband Schlitze aufweisen. Durch die Schlitze kann das Lamellenband einfach gebogen werden. Die Gürtel können die einzelnen Lamellen an beiden Enden leiterartig miteinander verbinden. Die Lamellen können bogenförmig vorgebogen sein.

Über die vorzugsweise bogenförmigen und nach radial innen ragenden Lamellen kann die äußere Gegenbuchse in der Kontakteinrichtung zentriert werden. Beim Einführen der äußeren Gegenbuchse in die äußere Kontaktbuchse können die Lamellen gegen die Vorbiegung elastisch federnd zurückgebogen werden und so die Rückstellkraft als Kontaktkraft aufbauen.

Ein in axialer Richtung wirkendes Federelement kann zwischen der ersten Stromschiene und der zweiten Stromschiene angeordnet sein. Das Federelement kann die innere Kontaktbuchse umschließen. Ein Federelement kann beispielsweise eine Wellfederscheibe sein. Ebenso kann das Federelement ein Federpaket aus Tellerfedern sein. Das Federelement kann Fertigungstoleranzen ausgleichen. Das Federelement kann thermische Dehnungen ausgleichen. Ebenso kann das Federelement Setzungsbewegungen des Kontaktsystems ausgleichen. Durch das Federelement kann ein guter elektrischer Kontakt zwischen den Kontakteinrichtungen sichergestellt werden.

Das äußere Kontaktbuchsenpaar kann ein Übermaß gegenüber einem Bezugsmaß des inneren Kontaktbuchsenpaars aufweisen. Das Federelement kann im verbauten Zustand um das Übermaß komprimiert sein. Beim Kontaktieren kann das äußere Kontaktbuchsenpaar dem inneren Kontaktbuchsenpaar um das Übermaß vorauseilen. Dadurch kann das äußere Kontaktbuchsenpaar vor dem inneren Kontaktbuchsenpaar elektrisch leitend miteinander verbunden sein.

Zwischen einer Rückseite zumindest einer der Kontakteinrichtungen und dem Zuganker kann ein in axialer Richtung wirkendes Federelement angeordnet sein. Das Federelement kann durch die Zugkraft komprimiert sein. Das Federelement kann beispielsweise eine Wellfederscheibe sein. Ebenso kann das Federelement ein Federpaket aus Tellerfedern sein. Das Federelement kann thermische Dehnungen ausgleichen. Ebenso kann das Federelement Setzungsbewegungen des Kontaktsystems ausgleichen. Durch das Federelement kann ein guter elektrischer Kontakt zwischen den Kontakteinrichtungen sichergestellt werden.

### Kurze Figurenbeschreibung

Nachfolgend werden vorteilhafte Ausführungsbeispiele der Erfindung unter Bezugnahme auf die begleitenden Figuren erläutert. Es zeigt:
Fig. 1 eine Schnittdarstellung eines Kontaktsystems gemäß einem Ausführungsbeispiel; und
Fig. 2 eine Schnittdarstellung eines Kontaktsystems gemäß einem weiteren Ausführungsbeispiel.

Die Figuren sind lediglich eine schematische Darstellungen und dienen nur der Erläuterung der Erfindung. Gleiche oder gleichwirkende Elemente sind durchgängig mit den gleichen Bezugszeichen versehen.

### Detaillierte Beschreibung

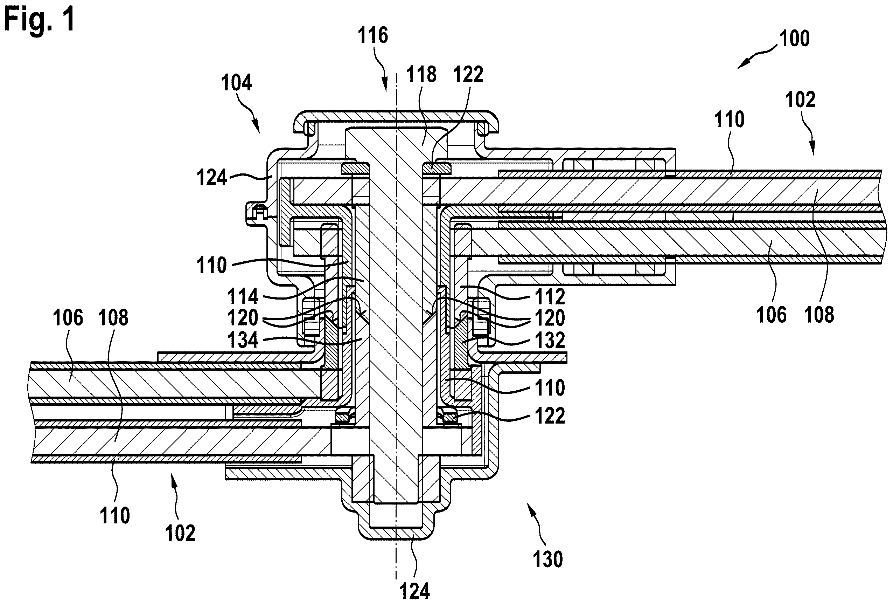

Fig. 1 zeigt eine Schnittdarstellung eines Kontaktsystems 100 gemäß einem Ausführungsbeispiel. Das Kontaktsystem 100 verbindet zwei Doppelstromschienen 102 elektrisch. Das Kontaktsystem 100 weist eine Kontakteinrichtung 104 und ein im Wesentlichen gegengleiches Gegenstück 130 zu der Kontakteinrichtung 104 auf. Die Doppelstromschienen 102 bestehen aus je zwei parallel verlaufenden Stromschienen 106, 108. Die Stromschienen 106, 108 weisen jeweils eine elektrische Isolierung 110 auf. Die Kontakteinrichtung 104 und das Gegenstück 130 sind an Endbereichen der Doppelstromscheinen 102 angeordnet. Dabei sind die Kontakteinrichtung 104 und das Gegenstück 130 quer zu einer Haupterstreckungsrichtung der Doppelstromschienen 102 ausgerichtet und jeweils an einer Flachseite der jeweiligen Doppelstromschiene 102 angeordnet.

Die Kontakteinrichtung 104 weist zwei koaxial angeordnete Kontaktbuchsen 112, 114 auf. Die Kontaktbuchsen 112, 114 sind im Wesentlichen hohlzylindrisch. Eine äußere Kontaktbuchse 112 umschließt eine innere Kontaktbuchse 114. Zwischen den Kontaktbuchsen 112, 114 ist ebenfalls eine Isolierung 110 angeordnet. Die äußere Kontaktbuchse 112 ist elektrisch leitend mit der ersten Stromschiene 106 der ersten Doppelstromschiene 102 verbunden. Die innere Kontaktbuchse 114 ist elektrisch leitend mit der zweiten Stromschiene 108 der ersten Doppelstromschiene 102 verbunden. Die innere Kontaktbuchse 114 verläuft durch die erste Stromschiene 106, um die dahinter angeordnete zweite Stromschiene 108 zu erreichen.

Das Gegenstück 130 weist zwei koaxial angeordnete Gegenbuchsen 132, 134 auf. Die Gegenbuchsen 132, 134 sind im Wesentlichen hohlzylindrisch. Eine äußere Gegenbuchse 132 umschließt eine innere Gegenbuchse 134. Zwischen den Gegenbuchsen 132, 134 ist ebenfalls eine Isolierung 110 angeordnet. Die äußere Gegenbuchse 132 ist elektrisch leitend mit der ersten Stromschiene 106 der zweiten Doppelstromschiene 102 verbunden. Die innere Gegenbuchse 134 ist elektrisch leitend mit der zweiten Stromschiene 108 der zweiten Doppelstromschiene 102 verbunden. Die innere Gegenbuchse 134 verläuft durch die erste Stromschiene 106, um die dahinter angeordnete zweite Stromschiene 108 zu erreichen.

Die äußere Kontaktbuchse 112 und die äußere Gegenbuchse 132 sind elektrisch leitend miteinander verbunden und bilden ein äußeres Kontaktbuchsenpaar aus. Die innere Kontaktbuchse 114 und die innere Gegenbuchse 134 sind ebenfalls elektrisch leitend miteinander verbunden und bilden ein inneres Kontaktbuchsenpaar aus.

Die innere Kontaktbuchse 114 und die innere Gegenbuchse 134 umschließen eine Aufnahme 116 für einen Zuganker 118. Der Zuganker 118 ist hier eine durch die Kontakteinrichtung 104 und das Gegenstück 130 hindurchreichende Schraube, auf die eine Mutter aufgeschraubt ist. Der Zuganker 118 liegt an Rückseiten der Kontakteinrichtung 104 und des Gegenstücks 130 beziehungsweise der zweiten Stromscheinen 108 an. Der Zuganker 118 zieht die Kontakteinrichtung 104 und das Gegenstück 130 mit einer Zugkraft zusammen, bis stirnseitige Kontaktflächen 120 der Kontaktbuchsen 112, 114 und der Gegenbuchsen 132, 134 gegeneinandergepresst werden.

In einem Ausführungsbeispiel sind die Stromschienen 106, 108 aus einem Aluminiummaterial, während die Kontaktbuchsen 112, 114 und die Gegenbuchsen 132, 134 aus einem Kupfermaterial sind. Die Kontaktbuchsen 112, 114 und die Gegenbuchsen 132, 134 sind mit den Stromschienen 106, 108 durch Reibschweißen verbunden, um eine sichere elektrisch leitende Verbindung zu erhalten.

In einem Ausführungsbeispiel ist der Zuganker 118 elektrisch leitend mit der inneren Kontaktbuchse 114, der inneren Gegenbuchse 134 und den zweiten Stromschienen 108 verbunden. Im Betrieb fließt somit auch durch den Zuganker 118 Strom.

In einem Ausführungsbeispiel ist die äußere Kontaktbuchse 112 der Kontakteinrichtung 104 länger als die innere Kontaktbuchse 114 der Kontakteinrichtung 104, während die äußere Gegenbuchse 132 des Gegenstücks 130 kürzer als die innere Gegenbuchse 134 des Gegenstücks 130 ist. Das Kontaktsystem 100 zentriert sich durch einen entstehenden Absatz zwischen den Kontaktbuchsen 112, 114 selbst.

In einem Ausführungsbeispiel sind die Kontaktflächen 120 der Kontaktbuchsen 112, 114 und Gegenbuchsen 132, 134 konisch. Dabei sind die Kontaktflächen 120 der Kontakteinrichtung 104 ringförmige Kegelabschnitte, während die Kontaktflächen 120 des Gegenstücks 130 ringförmige Trichterabschnitte sind, oder umgekehrt. Durch die Trichterform kann ein geringer Seitenversatz bei der Montage ausgeglichen werden, da die konischen Kontaktflächen 120 aneinander abgleiten.

Alternativ können die Kontaktflächen 120 auch sphärisch ausgeführt sein. Dann sind die Kontaktflächen 120 konkave beziehungsweise konvexe, ringförmige Kugelabschnitte. Die Kontaktflächen 120 der inneren Kontaktbuchse 114 und der äußeren Kontaktbuchse 112 können Kugelabschnitte derselben Kugel sein, also einen gemeinsamen Radiusmittelpunkt aufweisen. So können die Kontakteinrichtungen 104 nicht gegeneinander verkanten und das Kontaktsystem 100 kann eine Winkeltoleranz aufweisen.

In einem Ausführungsbeispiel ist bei dem Gegenstück 130 ein Federelement 122 zwischen der inneren Gegenbuchse 134 und der äußeren Gegenbuchse 132 beziehungsweise zwischen den Stromschienen 106, 108 der zweiten Doppelstromschiene 102 angeordnet. Die Gegenbuchsen 132, 134 sind axial beweglich zueinander. In einem entspannten Zustand des Federelements 122 eilt die äußere Gegenbuchse 132 der inneren Gegenbuchse 134 geringfügig voraus. Damit berühren sich beim Zusammenfügen des Kontaktsystems 100 die Kontaktflächen 120 des äußeren Kontaktbuchsenpaars vor den Kontaktflächen 120 des inneren Kontaktbuchsenpaars. Damit sich das innere Kontaktbuchsenpaar berührt, zieht der Zuganker 118 das Kontaktsystem 100 gegen das Federelement 122 zusammen und komprimiert das Federelement 122. Eine Federrate des Federelements 122 und ein Federweg des Federelements 122 definieren eine an den äußeren Kontaktflächen 120 wirkende Kontaktkraft. Der Federweg entspricht einer Strecke, um die die äußere Gegenbuchse 132 der inneren Gegenbuchse 134 vorauseilt. Durch das Federelement 122 werden Fertigungstoleranzen der Kontakteinrichtung 104 und des Gegenstücks 130 ausgeglichen.

In einem Ausführungsbeispiel ist zwischen einem Schraubenkopf des Zugankers 118 und einer Rückseite der Kontakteinrichtung 104 ein Federelement 122 angeordnet. Das Federelement 122 wird beim Anziehen des Zugankers 118 mit der vollen Zugkraft des Zugankers 118 komprimiert. Das Federelement 122 kann unterschiedliche thermische Dehnungen des Zugankers 118 und des inneren Kontaktbuchsenpaars kompensieren.

In einem Ausführungsbeispiel ist das gesamte Kontaktsystem 100 inklusive der Endbereiche der Doppelstromschienen 102 in einem elektrisch isolierenden Gehäuse 124 angeordnet. Das Gehäuse ist aus einem Kunststoffmaterial und weist eine Zugangsöffnung zum Zuganker 118 auf. Die Zugangsöffnung ist durch einen elektrisch isolierenden Deckel verschlossen.

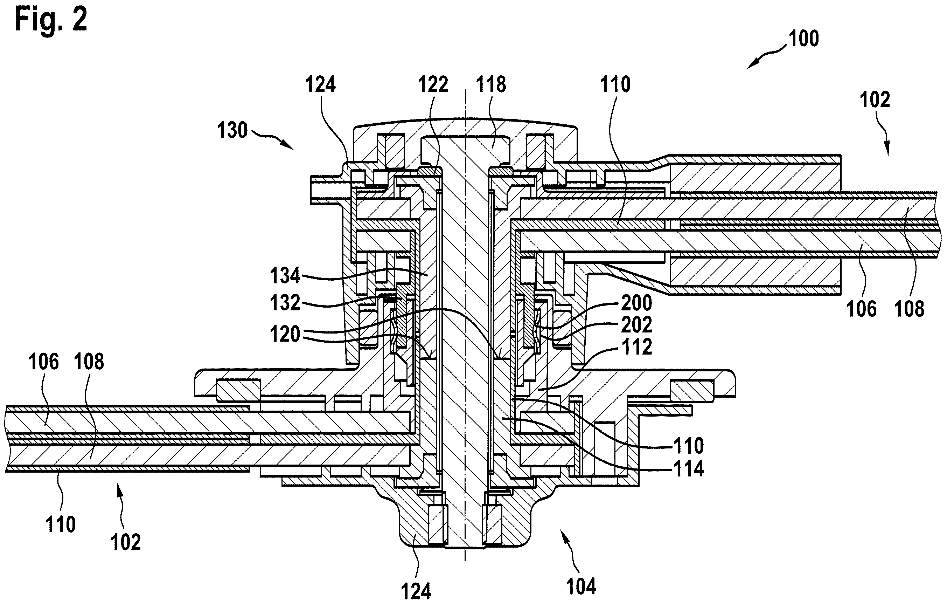

Fig. 2 zeigt eine Schnittdarstellung eines Kontaktsystems 100 gemäß einem Ausführungsbeispiel. Das Kontaktsystem 100 entspricht im Wesentlichen dem Kontaktsystem in Fig. 1. Im Gegensatz dazu wirkt der Zuganker 118 hier nur auf das innere Kontaktbuchsenpaar. Das innere Kontaktbuchsenpaar ist wie in Fig. 1 stirnseitig an den Kontaktflächen 120 elektrisch kontaktiert. Die Zugkraft des Zugankers 118 wirkt auf die inneren Kontaktflächen 120.

Die äußere Kontaktbuchse 112 weist auf einer Innenseite ein Lamellenband 200 auf, das eine Außenseite der äußeren Gegenbuchse 132 kontaktiert. Die äußere Gegenbuchse 132 ist also teilweise in der äußeren Kontaktbuchse 112 angeordnet. Das Lamellenband 200 wird beim Einführen des äußeren Gegenstücks 132 in die äußere Kontaktbuchse 112 elastisch verformt und presst so mit einer Anpresskraft gegen die Außenseite der äußeren Gegenbuchse 132.

Durch das elastische Lamellenband 200 können sich die äußere Kontaktbuchse 112 und die äußere Gegenbuchse 132 relativ zueinander bewegen, um thermische Dehnungen, Winkelbewegungen der Doppelstromschienen 102 und Toleranzen des Kontaktsystems 100 zu kompensieren. Insbesondere können sich die äußere Kontaktbuchse 112 und die äußere Gegenbuchse 132 ohne Unterbrechung des elektrischen Kontakts axial zueinander verschieben.

In einem Ausführungsbeispiel besteht das Lamellenband 200 aus einem leiterförmigen Streifen Metallblech. Durch eine Vielzahl von in den Streifen geschnittenen beziehungsweise gestanzten parallelen Schlitzen weist das Lamellenband 200 einen oberen Gurt, einen unteren Gurt und die zwischen den Schlitzen ausgebildeten Lamellen auf. Die Lamellen sind um eine Längsachse des Streifens bogenförmig gebogen. Zum Einfügen in die äußere Kontaktbuchse 112 wird der Streifen auf Länge geschnitten und spiralförmig gewickelt. Innerhalb der Kontaktbuchse 112 wird die Wicklung gelöst und der Streifen legt sich durch eine Rückstellkraft der oberen und unteren Gurte ringförmig an die Innenseite der äußeren Kontaktbuchse 112 an.

In einem Ausführungsbeispiel ist das Lamellenband 200 in einer ringförmig auf der Innenseite um die äußere Kontaktbuchse 112 umlaufenden Nut 202 angeordnet. Durch die Nut 200 ist das Lamellenband 200 axial fixiert und kann beim Einschieben der äußeren Gegenbuchse 132 in die äußere Kontaktbuchse 112 nicht axial verschoben werden.

In einem Ausführungsbeispiel ist die äußere Gegenbuchse 132 in einem ringförmigen Spalt zwischen der äußeren Kontaktbuchse 112 und der Isolierung 110 angeordnet. Die äußere Kontaktbuchse 112 weist einen vergrößerten Durchmesser auf, um Raum für den Spalt bereitzustellen. Durch den Spalt sind die Kontakteinrichtung 104 und das Gegenstück 130 verschachtelt und weisen eine reduzierte Bauhöhe auf.

Mit anderen Worten wird eine zentralverschraubte Doppelbuchse als Kontaktsystem für ein Doppelschienen-Energieübertragungssystem vorgestellt.

Zur Übertragung elektrischer Energie können neben klassischen Rundleiter- und Einzelschienensystemen im Bereich der E-Mobilität auch Doppelschienensysteme eingesetzt werden, da sie durch Feldauslöschung Vorteile bezüglich geringerer elektromagnetischer Feldabstrahlung aufweisen. Die Feldauslöschung resultiert aus einer geometrischen Anordnung von deckungsgleich übereinanderliegenden Reckteckschienen in möglichst geringem Abstand zueinander. Für die Anbindung dieser Doppelschienensysteme an Komponenten wie Ladedosen, Schaltboxen oder Batterien sind Schnittstellen mit einem Kontaktierungssystem erforderlich.

Der vorliegende Ansatz stellt ein Kontaktierungssystem vor, das geometrisch aus zwei konzentrisch ineinander liegenden, elektrisch aber voneinander isolierten Buchsenkontakten besteht. Kennzeichnend sind die Kontaktflächen auf der Stirnseite der Buchsen, die als orthogonale Fläche zur Buchsenmittelachse, als Konusflächen oder als sphärische Flächen ausgeführt sein können. Die notwendige Kontaktkraft wird über eine durchgängige und gegen Materialrelaxation vorgespannte Zentralschraube aufgebracht, wobei über eine weitere Vorspannung der inneren Buchsenelemente mittels z. B. einer Wellenfeder der Toleranzausgleich zwischen den Kontaktpaaren der Plus- und der Minusseite des Kontakts gewährleistet wird. Das Kontaktsystem ist dadurch in allen drei Achsen bestimmt, es ergeben sich keine Freiheitsgrade für Mikrovibrationen.

Das Kontaktsystem kann gehäuseseitig verschraubt oder auch verriegelt werden. Als Einsatzgebiet kommen die Schnittstelle zur Ladedose (optional direkt verschraubt in einen der DC-Pins), die Schnittstelle zur Schaltbox oder Batterie sowie die Verwendung als fliegende Trennstelle einer segmentierten Doppelschiene in schwierigen Bauräumen, in denen deren gesamte Länge nicht handhabbar erscheint, beziehungsweise nicht in einem Stück montiert werden kann, in Betracht.

Im Rahmen der steigenden elektrischen Leistungsanforderungen im Rahmen der E-Mobilität rückt der Aspekt des Insassenschutzes vor elektromagnetischen Belastungen (ICNIRP) immer stärker in den Fokus. Hochvolt (HV)-Doppelschienensysteme können hohe Energiemengen bei gleichzeitig geringer elektromagnetischer Feldabstrahlung transportieren. Das Schienensystem benötigt geeignete außenraumtaugliche Schnittstellen. Durch das vorgestellte Kontaktsystem ist die Doppelschiene im Bauraum als Schnittstelle zur Schaltbox oder Batterie einsetzbar. Ebenso ist das Kontaktsystem als Schnittstelle zur Ladedose (optional direkt verschraubt in einen der DC-Pins), als Schnittstelle zur Schaltbox oder Batterie, sowie als fliegende Trennstelle einer segmentierten Doppelschiene in schwierigen Bauräumen, in denen deren gesamte Länge nicht handhabbar erscheint einsetzbar.

Die Abbildung zeigt die Schnittdarstellung durch das Kontaktsystem mit angeflanschten Stromschienen. Die Gehäuse sind lediglich konzeptionell dargestellt. Im Schnitt zu sehen ist das Federelement (hier im Beispiel als Wellenfeder dargestellt), welches die äußere Kontaktbuchse des Headers nach oben vorspannt und den Toleranzausgleich gewährleistet.

Das äußere, größere Buchsenpaar ist in der Konstruktion so ausgelegt, dass in jedem Toleranzfall ein Untermaß in der Länge zur Vergleichslänge des inneren Buchsenpaars vorhanden ist. Dieses Untermaß wird durch eine Federvorspannung behoben.

Die Kontaktkraft des äußeren Buchsenpaars wird nur durch die Federvorspannung festgelegt. Eine Konstellation, in der das innere Buchsenpaar vor dem äußeren Buchsenpaar kontaktiert, ist dadurch in jedem Fall ausgeschlossen.

Die Doppelbuchse für das Doppelschienen-Energieübertragungssystem kann auch mit Lamelle und zentralverschraubt ausgeführt sein.

Auch dieses Ausführungsbeispiel besteht geometrisch aus zwei konzentrisch ineinander liegenden, elektrisch aber voneinander isolierten Buchsen, wobei die elektrische Verbindung des inneren Kontaktpaares stirnseitig durch einen Zuganker realisiert wird, während das äußere Kontaktpaar als ineinandergreifende Buchsen ausgeführt ist. Kennzeichnend für das Buchsenkontaktsystem ist das als Kontaktfläche an den Innenflächen der äußeren Buchse eingebrachte Lamellenband. Dieses kann als Endlosband vorgestanzt, abgelängt und in eine dafür in der Buchse vorgesehene Ringnut eingelegt werden. Die Kontaktflächen auf der Stirnseite des inneren Kontaktpaares können als orthogonale Fläche zur Buchsenmittelachse, als Konusflächen oder als sphärische Flächen ausgeführt sein. Die notwendige Kontaktkraft wird über einen durchgängigen und gegen Materialrelaxation vorgespannten Zuganker (z.B. durch eine Zentralschraube) aufgebracht.

In Fig. 2 ist eine Schnittansicht des Ausführungsbeispiels mit dem stirnseitig kontaktierenden Schraubkontaktsystem der inneren Buchse und dem Lamellenkontaktsystem der äußeren Buchse dargestellt. Außerdem ist in der Schnittdarstellung das Kontaktsystem mit angeflanschten Stromschienen dargestellt. Die dargestellten Gehäuse sind lediglich angedeutet.

Der Zuganker ist als eine durchgehende Schraube ausgeführt, die vom hier oben dargestellten Stecker in den unten dargestellten Header verschraubt wird. Zwischen dem Kopf der Schraube und der inneren Kontaktbuchse des Steckers liegt ein Federelement, das die innere Kontaktbuchse des Headers nach oben vorspannt. Um den Toleranzausgleich zu gewährleisten, kontaktiert die äußere untere Buchse mit der eingebrachten Lamelle die eingesteckte äußere obere Buchse.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden.

Insbesondere sind die mechanischen Anordnungen und die Größenverhältnisse der einzelnen Elemente zueinander lediglich beispielhaft

### BEZUGSZEICHENLISTE

- 100: Kontaktsystem
- 102: Doppelstromschiene
- 104: Kontakteinrichtung
- 106: erste Stromschiene
- 108: zweite Stromschiene
- 110: Isolierung
- 112: äußere Kontaktbuchse
- 114: innere Kontaktbuchse
- 116: Aufnahme
- 118: Zuganker
- 120: Kontaktfläche
- 122: Federelement
- 124: Gehäuse
- 130: Gegenstück
- 132: äußere Gegenbuchse
- 134: innere Gegenbuchse

- 200: Lamellenband
- 202: Nut

## Patentansprüche

1. Doppelstromschiene (102) mit einer Kontakteinrichtung (104), wobei die Doppelstromschiene (102) eine erste Stromschiene (106) und eine zweite Stromschiene (108) aufweist, die durch eine Isolierung (110) voneinander separiert sind und zu einem Stapel übereinandergestapelt sind, wobei die Kontakteinrichtung (104) eine äußere Kontaktbuchse (112) zum Kontaktieren einer äußeren Gegenbuchse (132) eines Gegenstücks (130) zu der Kontakteinrichtung (104) und eine koaxial in der äußeren Kontaktbuchse (112) angeordnete innere Kontaktbuchse (114) zum Kontaktieren einer inneren Gegenbuchse (134) des Gegenstücks (130) aufweist, wobei die innere Kontaktbuchse (114) eine axiale Aufnahme (116) für einen Zuganker (118) zum Ausüben einer axialen Zugkraft zwischen der Kontakteinrichtung (104) und dem Gegenstück (130) umschließt, wobei die äußere Kontaktbuchse (112) auf einer Flachseite der ersten Stromschiene (106) angeordnet ist und mit der ersten Stromschiene (106) elektrisch leitend verbunden ist, wobei die innere Kontaktbuchse (114) mit der zweiten Stromschiene (108) elektrisch leitend verbunden ist und die erste Stromschiene (106) durchdringt, wobei die Aufnahme (116) die erste Stromschiene (106) und die zweite Stromschiene (108) durchdringt,
wobei eine stirnseitige Kontaktfläche (120) der äußeren Kontaktbuchse (112) über eine stirnseitige Kontaktfläche (120) der inneren Kontaktbuchse (114) übersteht.

2. Doppelstromschiene (102) mit einer Kontakteinrichtung (104) gemäß Anspruch 1, bei der eine stirnseitige Kontaktfläche (120) der äußeren Kontaktbuchse (112) konisch geformt ist und/oder eine stirnseitige Kontaktfläche (120) der inneren Kontaktbuchse (114) konisch geformt ist.

3. Doppelstromschiene (102) mit einer Kontakteinrichtung (104) gemäß Anspruch 1, bei der eine stirnseitige Kontaktfläche (120) der äußeren Kontaktbuchse (112) sphärisch geformt ist und/oder eine stirnseitige Kontaktfläche (120) der inneren Kontaktbuchse (114) sphärisch geformt ist.

4. Doppelstromschiene (102) mit einer Kontakteinrichtung (104) gemäß einem der vorhergehenden Ansprüche, bei der auf einer Innenseite der äußeren Kontaktbuchse (112) ein Lamellenband (200) zum Kontaktieren der äußeren Gegenbuchse (134) angeordnet ist.

5. Doppelstromschiene (102) mit einer Kontakteinrichtung (104) gemäß einem der Ansprüche 1 bis 3, bei der ein in axialer Richtung wirkendes Federelement (122) zwischen der ersten Stromschiene (106) und der zweiten Stromschiene (108) angeordnet ist, wobei das Federelement (122) die innere Kontaktbuchse (114) umschließt.

6. Kontaktsystem (100) mit zwei Doppelstromschienen (102), wobei die Doppelstromschienen (102) je eine erste Stromschiene (106) und eine zweite Stromschiene (108) aufweisen, die durch eine Isolierung (110) voneinander separiert sind und zu einem Stapel übereinandergestapelt sind, wobei die eine Doppelstromschiene (102) gemäß einem der Ansprüche 1-5 ist, und wobei die andere Doppelstromschiene (102) ein Gegenstück (130) zu der Kontakteinrichtung (104) aufweist, wobei die äußere Kontaktbuchse (112) elektrisch leitend mit einer äußeren Gegenbuchse (132) des Gegenstücks (130) verbunden ist und ein äußeres Kontaktbuchsenpaar des Kontaktsystems (100) ausbildet, wobei die innere Kontaktbuchse (114) an einer stirnseitigen Kontaktfläche (120) elektrisch leitend mit einer inneren Gegenbuchse (134) des Gegenstücks (130) verbunden ist und ein inneres Kontaktbuchsenpaar des Kontaktsystems (100) ausbildet, wobei ein Zuganker (118) zum Ausüben einer axialen Zugkraft in der Aufnahme (116) angeordnet ist und die Kontakteinrichtung (104) und das Gegenstück (130) mit der Zugkraft zusammenzieht.

7. Kontaktsystem (100) gemäß Anspruch 6, bei dem die Kontakteinrichtung (104) ein Federelement (122) gemäß Anspruch 5 aufweist, wobei das äußere Kontaktbuchsenpaar ein Übermaß gegenüber einem Bezugsmaß des inneren Kontaktbuchsenpaars aufweist, wobei das Federelement (122) um das Übermaß komprimiert ist.

8. Kontaktsystem (100) gemäß einem der Ansprüche 6 bis 7, bei dem zwischen einer Rückseite der Kontakteinrichtung (104) und dem Zuganker (118) ein in axialer Richtung wirkendes Federelement (122) angeordnet ist, wobei das Federelement (122) durch die Zugkraft komprimiert ist.

## Claims

1. Double busbar (102) having a contact device (104), wherein the double busbar (102) has a first busbar (106) and a second busbar (108), which are separated from each other by an insulation (110) and are stacked one above the other to form a stack, wherein the contact device (104) has an outer contact socket (112) for contacting an outer mating socket (132) of a mating piece (130) to the contact device (104) and an inner contact socket (114) arranged coaxially in the outer contact socket (112) for contacting an inner mating socket (134) of the mating piece (130), wherein the inner contact socket (114) encloses an axial receptacle (116) for a tie rod (118) for exerting an axial tensile force between the contact device (104) and the mating piece (130), wherein the outer contact socket (112) is arranged on a flat side of the first busbar (106) and is electrically conductively connected to the first busbar (106), wherein the inner contact socket (114) is electrically conductively connected to the second busbar (108) and passes through the first busbar (106), wherein the receptacle (116) passes through the first busbar (106) and the second busbar (108),
wherein an end-side contact face (120) of the outer contact socket (112) projects beyond an end-side contact face (120) of the inner contact socket (114).

2. Double busbar (102) having a contact device (104) according to Claim 1, in which an end-side contact face (120) of the outer contact socket (112) is conical and/or an end-side contact face (120) of the inner contact socket (114) is conical.

3. Double busbar (102) having a contact device (104) according to Claim 1, in which an end-side contact face (120) of the outer contact socket (112) is spherical and/or an end-side contact face (120) of the inner contact socket (114) is spherical.

4. Double busbar (102) having a contact device (104) according to any of the preceding claims, in which a lamellar strip (200) for contacting the outer mating socket (134) is arranged on an inner side of the outer contact socket (112).

5. Double busbar (102) having a contact device (104) according to any of Claims 1 to 3, in which a spring element (122) acting in the axial direction is arranged between the first busbar (106) and the second busbar (108), wherein the spring element (122) surrounds the inner contact socket (114).

6. Contact system (100) having two double busbars (102), wherein the double busbars (102) each have a first busbar (106) and a second busbar (108), which are separated from each other by an insulation (110) and are stacked one above the other to form a stack, wherein the one double busbar (102) is a busbar according to any of Claims 1-5, and wherein the other double busbar (102) has a mating piece (130) to the contact device (104), wherein the outer contact socket (112) is electrically conductively connected to an outer mating socket (132) of the mating piece (130) and forms an outer contact socket pair of the contact system (100), wherein the inner contact socket (114) is electrically conductively connected to an inner mating socket (134) of the mating piece (130) at an end-side contact face (120) and forms an inner contact socket pair of the contact system (100), wherein a tie rod (118) for exerting an axial tensile force is arranged in the receptacle (116) and pulls the contact device (104) and the mating piece (130) together with the tensile force.

7. Contact system (100) according to Claim 6, in which the contact device (104) has a spring element (122) according to Claim 5, wherein the outer contact socket pair has an overdimension in relation to a reference dimension of the inner contact socket pair, wherein the spring element (122) is compressed by the overdimension.

8. Contact system (100) according to either of Claims 6 and 7, in which a spring element (122) acting in the axial direction is arranged between a rear side of the contact device (104) and the tie rod (118), wherein the spring element (122) is compressed by the tensile force.

## Revendications

1. Barre conductrice double (102) avec un dispositif de contact (104), le rail conducteur double (102) présentant une première barre conductrice (106) et une deuxième barre conductrice (108) séparées l'une de l'autre par une isolation (110) et empilées l'une sur l'autre en une pile, le dispositif de contact (104) présentant une douille de contact extérieure (112) pour entrer en contact avec une douille complémentaire extérieure (132) d'une pièce complémentaire (130) avec le dispositif de contact (104) et une douille de contact intérieure (114) agencée coaxialement dans la douille de contact extérieure (112) pour entrer en contact avec une douille complémentaire intérieure (134) de la pièce complémentaire (130), la douille de contact intérieure (114) entourant un logement axial (116) pour un tirant (118) destiné à exercer une force de traction axiale entre le dispositif de contact (104) et la pièce complémentaire (130), la douille de contact extérieure (112) étant agencée sur un côté plat de la première barre conductrice (106) et étant reliée de manière électriquement conductrice à la première barre conductrice (106), la douille de contact intérieure (114) étant reliée de manière électriquement conductrice à la deuxième barre conductrice (108) et traversant la première barre conductrice (106), le logement (116) traversant la première barre conductrice (106) et la deuxième barre conductrice (108),
une surface de contact frontale (120) de la douille de contact extérieure (112) dépassant d'une surface de contact frontale (120) de la douille de contact intérieure (114).

2. Barre conductrice double (102) avec un dispositif de contact (104) selon la revendication 1, dans lequel une surface de contact frontale (120) de la douille de contact extérieure (112) est de forme conique et/ou une surface de contact frontale (120) de la douille de contact intérieure (114) est de forme conique.

3. Barre conductrice double (102) avec un dispositif de contact (104) selon la revendication 1, dans lequel une surface de contact frontale (120) de la douille de contact extérieure (112) est de forme sphérique et/ou une surface de contact frontale (120) de la douille de contact intérieure (114) est de forme sphérique.

4. Barre conductrice double (102) avec un dispositif de contact (104) selon l'une quelconque des revendications précédentes, dans lequel une bande à lamelles (200) est agencée sur un côté intérieur de la douille de contact extérieure (112) pour entrer en contact avec la douille complémentaire extérieure (134).

5. Barre conductrice double (102) avec un dispositif de contact (104) selon l'une quelconque des revendications 1 à 3, dans lequel un élément de ressort (122) agissant dans la direction axiale est agencé entre la première barre conductrice (106) et la deuxième barre conductrice (108), l'élément de ressort (122) entourant la douille de contact intérieure (114).

6. Système de contact (100) avec deux barres conductrices doubles (102), les barres conductrices doubles (102) présentant chacune une première barre conductrice (106) et une deuxième barre conductrice (108) séparées l'une de l'autre par une isolation (110) et empilées l'une sur l'autre en une pile, l'une des barres conductrices doubles (102) étant selon l'une quelconque des revendications 1 à 5, et l'autre barre conductrice double (102) présentant une pièce complémentaire (130) au dispositif de contact (104), la douille de contact extérieure (112) étant reliée de manière électriquement conductrice à une douille complémentaire extérieure (132) de la pièce complémentaire (130) et réalisant une paire de douilles de contact extérieures du système de contact (100), la douille de contact intérieure (114) étant reliée de manière électriquement conductrice à une douille complémentaire intérieure (134) de la pièce complémentaire (130) sur une surface de contact frontale (120) et réalisant une paire de douilles de contact intérieures du système de contact (100), un tirant (118) étant agencé dans le logement (116) pour exercer une force de traction axiale et tirant le dispositif de contact (104) et la pièce complémentaire (130) ensemble avec la force de traction.

7. Système de contact (100) selon la revendication 6, dans lequel le dispositif de contact (104) présente un élément à ressort (122) selon la revendication 5, la paire de douilles de contact extérieures présentant une surdimension par rapport à une dimension de référence de la paire de douilles de contact intérieures, l'élément à ressort (122) étant comprimé de la surdimension.

8. Système de contact (100) selon l'une quelconque des revendications 6 à 7, dans lequel un élément à ressort (122) agissant dans la direction axiale est agencé entre un côté arrière du dispositif de contact (104) et le tirant (118), l'élément à ressort (122) étant comprimé par la force de traction.
